# EUROPÄISCHE PATENTSCHRIFT

(11) **EP 3 569 762 B1**
(45) Veröffentlichungstag und Bekanntmachung des Hinweises auf die Patenterteilung: **12.10.2022**
(21) Anmeldenummer: 19173520.8
(22) Anmeldetag: 09.05.2019
(51) Int. Cl.: D06F 67/04

(54) **VERFAHREN UND VORRICHTUNG ZUM AUSBREITEN VON WÄSCHESTÜCKEN**
METHOD AND DEVICE FOR SPREADING LAUNDRY
PROCÉDÉ ET DISPOSITIF POUR ÉTENDRE LE LINGE

(30) Priorität: 15.05.2018 DE 102018003875
(43) Veröffentlichungstag der Anmeldung: 20.11.2019
(73) Patentinhaber: Herbert Kannegiesser GmbH, 32602 Vlotho (DE)
(72) Erfinder: Heinz, Engelbert, 32602 Vlotho (DE); Bringewatt, Wilhelm, 32457 Porta Westfalica (DE)
(74) Vertreter: Möller, Friedrich

(56) Entgegenhaltungen:
- EP-A1- 3 147 405
- EP-A1- 3 181 752
- EP-A2- 2 045 391
- DE-A1- 4 143 069

## Beschreibung

Die Erfindung betrifft ein Verfahren zum Ausbreiten von Wäschestücken gemäß dem Oberbegriff des Anspruchs 1. Die Erfindung betrifft des Weiteren eine Vorrichtung zum Ausbreiten von Wäschestücken gemäß dem Oberbegriff des Anspruchs 8.

Wäschestücke, und zwar vor allem sogenannte Flachwäsche wie Tischwäsche, Bettwäsche und dergleichen, werden von einer Eingabemaschine einer nachfolgenden Wäschebehandlungseinrichtung, beispielsweise einer Mangel, zugeführt. Von der Eingabemaschine werden die Wäschestücke zunächst ausgebreitet, um im ausgebreiteten Zustand der nachfolgenden Wäschebehandlungsmaschine, beispielsweise Mangel, zugeführt zu werden.

Eingabemaschinen verfügen zum Ausbreiten der Wäschestücke über eine Spreizeinrichtung mit einem oder auch mehreren Spreizklammerpaaren. Jedes Spreizklammerpaar verfügt über zwei quer zur Zuführrichtung der auszubreitenden Wäschestücke zur nachfolgenden Wäschebehandlungseinrichtung auseinander- und zusammenfahrbare Spreizklammern. Beim Auseinanderfahren der jeweils ein Wäschestück haltenden Spreizklammern des jeweiligen Spreizklammerpaars wird das von den Spreizklammern gehaltene Wäschestück ausgebreitet und dabei ein Durchhang zwischen benachbarten, von den Spreizklammern des jeweiligen Spreizklammerpaars gehaltenen Eckbereichen des oberen Rands des Wäschestücks zumindest verringert, vorzugsweise annähernd beseitigt. Die Spreizklammern werden außerdem so verfahren, dass sie das jeweilige Wäschestück mittig auf der vorgesehenen Eingabebahn der Eingabemaschine zentrieren.

Das Ausbreiten der Wäschestück darf nur derart erfolgen, dass der von den Spreizklammern des jeweiligen Spreizklammerpaars zwischen benachbarten Eckbereichen, insbesondere Ecken, gehaltene Rand, der im Folgenden auch als "auszubreitender Rand" und/oder "vorderer Rand" bezeichnet wird, nicht übermäßig gestreckt wird.

Es ist aus der EP 3 181 752 A1 bekannt, einen oberen Rand eines jeweiligen textilen Gegenstands von einer Spreizeinrichtung auszubreiten, die über benachbarte Ecken des vorderen Rands des textilen Gegenstands haltende Spreizklammern verfügt. Die Spreizklammern sind an Schlitten angeordnet, die durch Linearmotoren gezielt zusammen- und auseinanderfahrbar sind. Dazu ist der Spreizeinrichtung eine Steuerung zugeordnet, der die Breite des textilen Gegenstands, die der Länge des auszustreckenden vorderen Rands desselben entspricht, mitgeteilt wird. Anhand der der Steuerung mitgeteilten Breite des auszustreckenden textilen Gegenstands werden von den Schlitten die Spreizklammern so weit auseinandergefahren, dass dabei der vordere Rand des textilen Gegenstands ausgestreckt wird.

Es ist aus der EP 2 045 391 A2 bekannt, das übermäßige Strecken des auszubreitenden vorderen Rands des jeweiligen Wäschestücks, insbesondere der in Eingaberichtung voraneilenden Querkante des Wäschestücks, zu vermeiden, indem der Durchhang bzw. die Länge des vorderen Rands oder der vorderen Querkante des Wäschestücks durch mindestens ein Detektionsmittel bzw. eine Detektionseinrichtung gemessen wird. Diese Länge des oberen Rands entspricht bezogen auf das quer zur Eingaberichtung erfolgende Spreizen des Wäschestücks der Breite des Wäschestücks. Die Messung der Länge des Rands bzw. der Breite des Wäschestücks erfolgt nach dem Einhängen desselben in die Spreizklammern. Das beeinträchtigt die Dauer des Ausbreitens des Wäschestücks von der Spreizeinrichtung, weil die jeweilige Detektionseinrichtung die Länge des vorderen Rands bzw. die Breite des jeweiligen Wäschestücks während des Spreizens desselben ermitteln muss.

Die DE 41 43 069 A1 offenbart das Ausbreiten des vorderen Rands eines textilen Gegenstands mit einer Spreizeinrichtung. Der Spreizeinrichtung sind ein Sensor oder eine Sensorleiste zugeordnet, die beim Spreizen die Breite des auszubreitenden vorderen Rands des textilen Gegenstands anhand einer Kettenlinienmessmethode ermittelt. Der Sensor bzw. die Messleiste sind hinter dem textilen Gegenstand angeordnet, so dass sie horizontalgerichtet den Durchhang des textilen Gegenstands vor dem vollständigen Spreizen desselben messen und daraus die der Länge des vorderen Rands entsprechende Breite des textilen Gegenstands ermittelt wird.

Der Erfindung liegt die Aufgabe zugrunde, ein Verfahren und eine Vorrichtung zum Ausbreiten von Wäschestücken zu schaffen, womit das jeweilige Wäschestück zuverlässig und vor allem auch schonend ausbreitbar ist.

Ein Verfahren zur Lösung dieser Aufgabe weist die Maßnahmen des Anspruchs 1 auf. Demnach ist es vorgesehen, schon vor der Übergabe der Eckbereiche des Rands des Wäschestücks an die Spreizklammern bei in vor der Spreizeinrichtung angeordneten Haltemitteln gehaltenen Eckbereichen den Rand zu vermessen. Vorzugsweise kann dadurch die sich über die Breite des Wäschestücks (im Zuführrichtung gesehen) erstreckende Länge des zwischen von Haltemitteln gehaltenen Eckbereichen sich befindenden Rands, insbesondere des voraneilenden Querrands, des jeweiligen Wäschestücks ermittelt werden, bevor dieses von der Spreizeinrichtung gespreizt wird. Die Länge des von der Spreizeinrichtung zu streckenden vorderen Rands, insbesondere vorderen Querrands, des jeweiligen Wäschestücks ist dadurch schon vor dem Ausbreiten desselben bekannt. Dadurch wird die Spreizeinrichtung von der Ermittlung der Länge und/ oder des Durchhangs des Rands des jeweiligen Wäschestücks befreit und dadurch der Spreizvorgang, insbesondere seine Taktzeit, verkürzt. Dabei sieht es das Verfahren vor, die der Breite des Wäschestücks entsprechende Länge des oberen Rands des Wäschestücks vom über demselben angeordneten mindestens einen Detektionsmittel durch eine berührungslose Abstandsmessung zu ermitteln. Insbesondere wird bei dieser Abstandsmessung die tiefste Stelle oder der tiefste Bereich des durchhängenden und von der Spreizeinrichtung auszustreckenden oberen Rands des Wäschestücks schon vor der Spreizeinrichtung ermittelt. Eine solche Messung ist einfach und zuverlässig durchführbar, beispielsweise durch analoge Sensoren.

Bevorzugt ist es vorgesehen, dass die Vermessung des von den Haltemitteln an seinen benachbarten Eckbereichen gehaltenen Rands des jeweiligen Wäschestücks bei gleichbleibendem Abstand der Haltemittel, vorzugsweise momentan stillstehenden Haltemitteln, ermittelt wird. Diese Messung kann, ohne dass dadurch die Taktzeit für das Ausbreiten des jeweiligen Wäschestücks verlängert wird, erfolgen, während das Wäschestück in den Haltemitteln vor der Spreizeinrichtung bereitgestellt ist, also auf die Übergabe an das als nächstes freiwerdende Spreizklammerpaar wartet. Die Vermessung, insbesondere Ermittlung der Länge, des vorderen Rands bzw. der voraneilenden Querkante des Wäschestücks kann so quasi statisch bei stillstehendem Wäschestück erfolgen.

Bei einer vorteilhaften Weiterbildung des Verfahrens ist es vorgesehen, die Vermessung des von den Haltemitteln an seinen benachbarten Eckbereichen bzw. Ecken gehaltenen Rands des jeweiligen Wäschestücks von oben vorzunehmen. Vorzugsweise ist es vorgesehen, dass dieses durch mindestens ein oberhalb des vermessenden Rands angeordnetes Detektionsmittel erfolgt. Bei einer horizontalen gedachten Verbindungslinie zwischen den Haltemitteln und den von diesen gehaltenen gegenüberliegenden Eckbereichen des Rands verläuft eine Messachse des mindestens einen Detektionsmittels senkrecht gerichtet rechtwinklig zu der gedachten Verbindungslinie, wobei die Verbindungslinie und die Messachse des mindestens einen Detektionsmittels in einer gemeinsamen vertikalen Ebene liegen. Wenn von den Haltemitteln das jeweilige Wäschestück ungehindert herunterhängt, ist diese vertikale Ebene gleichzeitig die Ebene des von den Haltemitteln herunterhängenden Wäschestücks.

Durch die Messung des Rands des jeweiligen Wäschestücks von oben wird die Messgenauigkeit größer, weil vor allem umgebungsbedingte Störeinflüsse eliminiert werden. Insbesondere wird so verhindert, dass vor und/oder hinter dem jeweils auszubreitenden Wäschestück sich befindende andere Wäschestücke die Messung des oberen Rands des Wäschestücks behindern oder negativ beeinflussen.

Andere Weiterbildungsmöglichkeiten des Verfahrens sehen es vor, dass nach der Ermittlung des Durchhangs und die daraus errechnete Länge des oberen Rands und/oder der Breite des Wäschestücks bei zwischen den von den Haltemitteln gehaltenen Eckbereichen an gegenüberliegenden Enden des Rands des Wäschestücks dieses von den Haltemitteln direkt an zwei Spreizklammern eines Spreizklammerpaars übergeben wird. Alternativ kann es vorgesehen sein, dass die Eckbereiche des jeweiligen vermessenen Wäschestücks von den Haltemitteln zunächst an andere Haltemittel übergeben werden, die das Wäschestück dann erst mit benachbarten Eckbereichen des vermessenen vorderen oder oberen Rands an die beiden Spreizklammern eines jeweiligen Spreizklammerpaars übergeben. Die genannten Vorgehensweisen stellen sicher, dass der obere Rand des jeweiligen Wäschestücks vermessen ist, bevor dieses an die Spreizklammern übergeben wird. Die Durchhangsmessung und insbesondere auch die daraus abgeleitete Breite bzw. Längenermittlung des Rands sind somit schon abgeschlossen, bevor das Wäschestück in den Einflussbereich der Spreizeinrichtung kommt. Dadurch kann der Spreizvorgang des Wäschestücks zügig erfolgen, weil keine Messung beim Spreizvorgang mehr vorgenommen werden muss. Außerdem lässt sich die Länge des vorderen Rands des jeweiligen Wäschestücks quasi statisch ermitteln, wenn das Wäschestück sich noch in den vorzugsweise ruhenden Haltemitteln befindet. Das geschieht vorzugsweise bei auf die Übergabe des Wäschestücks an die Spreizklammern eines freien Spreizklammerpaars wartenden Haltemitteln.

Vorteilhafterweise ist das Verfahren so ausgebildet, dass aus dem bei der von oben in senkrechter Richtung auf den Rand erfolgenden Abstandsmessung gewonnenen Abstandsmaß der tiefsten Stelle bzw. des tiefsten Bereichs des durchhängenden Rands zwischen den von den Haltemitteln gehaltenen Eckbereichen des Wäschestücks anhand der bekannten Positionen der Haltemittel und des mindestens einen Detektionsmittels die Länge des Rands rechnerisch ermittelt wird. Weil die Position der Haltemittel bekannt ist und vorzugsweise stets die gleiche ist und auch das mindestens eine Detektionsmittel ortsfest über einer gedachten Verbindungslinie der Haltemittel zum Halten gegenüberliegender Eckbereiche des oberen Rands des jeweiligen Wäschestücks angeordnet ist, lässt sich aus diesen fixen Position oder zumindest während der Messung des Abstandsmaßes gleichbleibenden Positionen zuverlässig an die jeweiligen Länge des an gegenüberliegenden Eckbereichen von den Haltemitteln gehaltenen oberen Rands ermitteln. Vorzugsweise entspricht der gemessene obere Rand in Eingaberichtung des Wäschestücks gesehen der Breite des Wäschestücks bzw. Eingabebreite desselben. Gemäß der vorstehend geschilderten Weise lässt sich aus dem vom mindestens einen Detektionsmittel ermittelten senkrechten Abstandsmaß von oben auf den durchhängenden gemessenen Rand die Länge dieses Rands und damit die Breite oder gegebenenfalls auch Länge des Wäschestücks berührungslos ermitteln. Daraus ergibt sich beim Spreizen der maximal zulässige Abstand der Spreizklammern, also das Maximalmaß, auf das die Spreizklammern des jeweiligen Spreizklammerpaars beim Ausbreiten des Wäschestücks auseinandergefahren werden dürfen, ohne den Rand beim Ausbreiten übermäßig auf Zug zu beanspruchen.

Eine Vorrichtung zur Lösung der eingangs genannten Aufgabe weist die Merkmale des Anspruchs 8 auf. Bei dieser Vorrichtung ist es vorgesehen, wenigstens ein Detektionsmittel über einer gedachten horizontalen Verbindungslinie benachbarter Eckbereiche des zu vermessenden Rands des Wäschestücks anzuordnen. Dadurch blickt die mindestens eine Detektionseinrichtung, vorzugsweise ihr wenigstens einer Sensor, von oben auf den noch einen Durchhang aufweisenden und zu vermessenden oberen Rand, insbesondere Querrand, des auszubreitenden Wäschestücks. Hinter und vor dem Wäschestück sich befindende Gegenstände, vor allem andere Wäschestücke, behindern oder verfälschen dadurch die Vermessung des Rands des jeweiligen Wäschestücks nicht oder jedenfalls nicht nennenswert.

Erfindungsgemäß ist es vorgesehen, das mindestens eine Detektionsmittel über dem Wäschestück, insbesondere über dem zu vermessenden oberen Rand des Wäschestücks anzuordnen. Dazu befindet sich das mindestens eine Detektionsmittel vorzugsweise senkrecht über dem Rand des Wäschestücks. Bevorzugt ist das wenigstens eine Detektionsmittel senkrechtgerichtet auf einer gedachten horizontalen Verbindungslinie der Haltemittel, insbesondere etwas darüber, angeordnet. Die Messachse des jeweiligen Detektionsmittels ist so senkrecht nach unten gerichtet, wodurch vor oder hinter dem zu vermessenden Wäschestück sich befindende andere Wäschestücke nicht stören und das Messergebnis nicht verfälschen.

Durch die von oben erfolgende Messung des Durchhangs des oberen Rands des Wäschestücks vor der Spreizeinrichtung braucht diese nicht mehr in die Messung der Länge des oberen Rands des Wäschestücks einbezogen zu werden. Anhand des ermittelten Durchhangs des oberen Rands des unter den Haltemitteln herunterhängenden Wäschestücks kann vor dem Ausbreiten desselben von der Spreizeinrichtung die Länge des oberen Rands, insbesondere des oberen Querrands, des Wäschestücks und somit das sogenannte Spreizmaß ermittelt werden. Bei diesem Spreizmaß handelt es sich um den Abstand, auf den beim Ausbreiten des Wäschestücks die Spreizklammern auseinandergefahren werden müssten, um das Wäschestück ausreichend auszubreiten, insbesondere den oberen Rand bzw. voraneilenden Querrand des Wäschestücks so weit auszustrecken, dass der Rand nur noch einen minimalen Durchhang aufweist, der zu keinen Beschädigungen des Wäschestücks führt. Aufgrund der vorher gemessenen und/oder errechneten Länge des oberen Rands bzw. des Querrands des Wäschestücks können von den Spreizklammern der Spreizeinrichtung die benachbarten Eckbereiche, vorzugsweise Ecken, des auszustreckenden oberen Rands des Wäschestücks gezielt gesteuert zur weitestgehenden Verringerung des Durchhangs des oberen Rands auseinandergefahren werden, wodurch es zum raschen und präzisen Ausbreiten des Wäschestücks kommt, ohne dieses, vor allem den oberen Rand desselben, übermäßig zu strecken und dabei gegebenenfalls zu beschädigen.

Bevorzugte Ausführungsbeispiele der Erfindung werden nachfolgend anhand der Zeichnung näher erläutert. In dieser zeigen:
- Fig. 1: eine perspektivische Gesamtansicht einer als Eingabemaschine ausgebildeten Vorrichtung,
- Fig. 2: eine Draufsicht auf die Vorrichtung der Fig. 1,
- Fig. 3: eine Seitenansicht einer Beladestation der Vorrichtung der Fig. 1 und 2,
- Fig. 4: eine Vorderansicht der Beladestation mit einem Wäschestück,
- Fig. 5: eine perspektivische Ansicht eines Transferklammerpaars der Vorrichtung der Fig. 1 und 2, und
- Fig. 6: eine Vorderansicht des Transferklammerpaars der Fig. 5 mit einem daran hängenden Wäschestück.

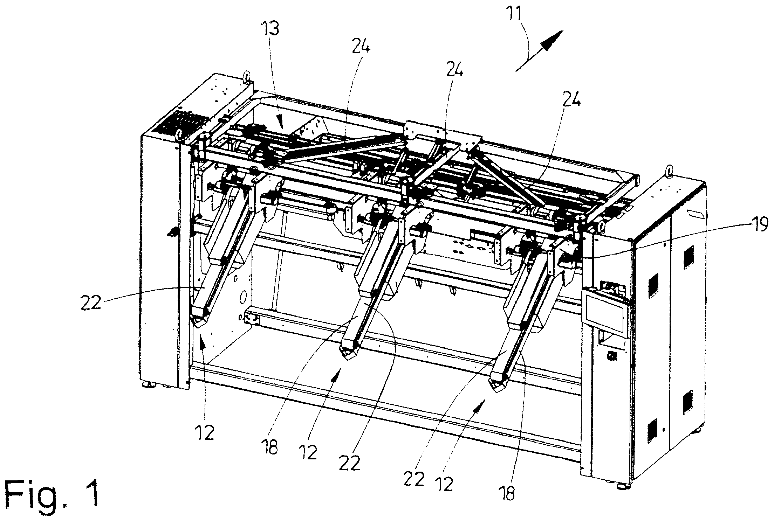

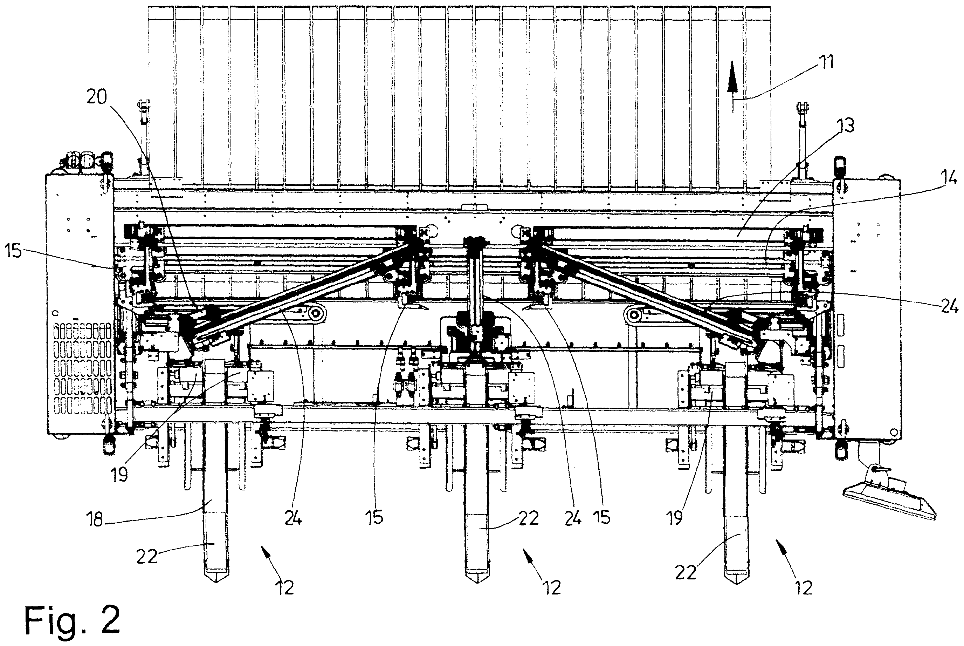

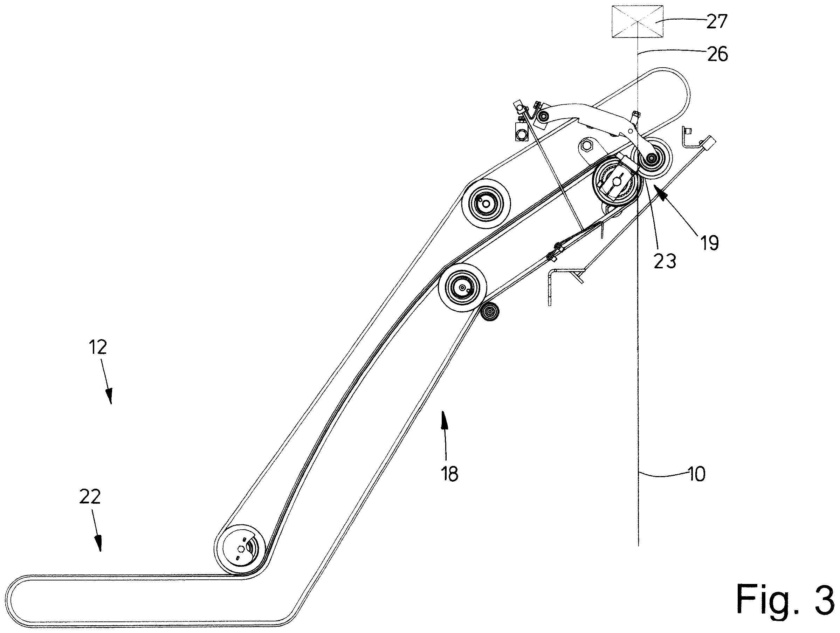

Die Figuren zeigen eine Vorrichtung, die als Eingabemaschine ausgebildet ist. In den Fig. 1 und 2 ist die Eingabemaschine vollständig dargestellt. Die Eingabemaschine dient dazu, die nur in den Fig. 3, 4 und 6 dargestellte Wäschestücke 10, und zwar vor allem Flachwäschestücke wie Bettlaken, Bettbezüge, Kissenbezüge, Handtücher, Tischdecken oder Ähnliches, in Zuführrichtung 10 einer in den Figuren nicht gezeigten Mangel zuzuführen. Die Vorrichtung kann aber auch dazu dienen, Wäschestücke 10 anderen Wäschebehandlungseinrichtungen zuzuführen, beispielsweise Faltmaschinen.

Die Wäschestücke 10 werden von der als Eingabemaschine ausgebildeten Vorrichtung vor dem Zuführen zu einer nachfolgenden Wäschebehandlungseinrichtung ausgebreitet. Im Fachjargon spricht man auch vom Ausstrecken oder Spreizen der Wäschestücke 10.

Die hier dargestellte Vorrichtung bzw. Eingabemaschine verfügt über drei gleich ausgebildete Beladestationen 12. Die Beladestationen 12 sind mit gleichem Abstand zueinander in einer quer zur Zuführrichtung 11 verlaufenden Reihe der Vorderseite der Eingabemaschine zugeordnet. Die Erfindung eignet sich auch für Eingabemaschinen mit einer größeren oder kleineren Anzahl von Beladestationen 12, und zwar auch für Eingabemaschinen mit nur einer einzigen Beladestation 12. Vor allem eignet sich die Erfindung auch für Eingabemaschinen mit anderen Beladestationen 12. Die Erfindung soll folglich nicht auf die in den Figuren gezeigte Vorrichtung und insbesondere nicht auf die hier gezeigten Beladestationen 12 beschränkt sein.

Jede Beladestation 12 verfügt über einen Beladeförderer 18, der das Wäschestück 10 in Zuführrichtung 11 transportiert. Jeder der gleich ausgebildeten Beladeförderer 18 der jeweiligen Beladestation 12 verfügt über zwei schmale, vorzugsweise gleich breite, Gurtförderer mit jeweils einem umlaufenden Fördergurt. Die Gurtförderer sind übereinander angeordnet zur Bildung eines Sandwichförderers, wobei der obere Gurtförderer kürzer ist als der untere Gurtförderer zur Bildung eines freiliegenden Auflegebereichs 22 auf dem freiliegenden vorderen Bereich eines Obertrums des längeren unteren Gurtförderers.

Dem in Zuführrichtung 11 gesehen hinteren Ende jedes Beladeförderers 18 sind zwei Eckenfinder 19 zugeordnet. Die Eckenfinder 19 ergreifen zunächst benachbarte Ecken 16 des späteren hinteren Querrands 17 des Wäschestücks 10 vom Beladeförderer 18. Dieser Querrand 17 wird dadurch der von einer Spreizeinrichtung 13 zu streckende bzw. zu spreizende vordere Querrand 17 des Wäschestücks 10, der in Zuführrichtung 11 vorauseilend und quer zur Zuführrichtung 11 orientiert der Mangel oder dergleichen zuzuführen ist. Die Eckenfinder 19 sind dem hinteren Ende des unteren Gurtförderers zugeordnet, und zwar auf beiden Seiten neben dem hinteren Ende des unteren Gurtförderers und teilweise dahinter. Jeder der vorzugsweise gleich ausgebildeten, aber durch Anordnung an gegenüberliegenden Seiten des hinteren Endes des unteren Gurtförderers spiegelbildlich orientierten Eckenfinder 19 verfügt über zwei Walzen, die zusammen ein Walzenpaar mit parallelen Längsmittelachsen bzw. Drehachsen bilden. Zwischen den Walzen des Walzenpaars ist ein Walzenspalt 23 gebildet. Eine Walze jedes Eckenfinders 19 ist drehend antreibbar. Jedoch sind die auf gegenüberliegenden Seiten eines Gurtförderers liegenden antreibbaren Walzen jedes Eckenfinders 19 unabhängig separat antreibbar.

Auf die Eckenfinder 19 jeder Beladestation 12 folgt ein Transferklammerpaar 20 mit zwei Transferklammern 21. Das Transferklammerpaar 20 der jeweiligen Beladestation 12 übernimmt benachbarte Eckbereiche, vorzugsweise Ecken 16, des noch nicht ausgestreckten (durchhängenden) Querrands 17 des Wäschestücks 10 von den Eckenfindern 19 und transportiert es zu zwei Spreizklammern 15 eines Spreizklammerpaars der Spreizeinrichtung 13. Die Spreizklammern 15 übernehmen die Ecken 16 des Querrands 17 des Wäschestücks 10 dann von den Transferklammern 21 des Transferklammerpaars 20 bzw. es werden von den Transferklammern 21 des Transferklammerpaars 20 die den Querrand 17 des Wäschestücks 10 begrenzenden Ecken 16 im noch unausgebreiteten Zustand mit noch durchhängendem Querrand 17 an die Spreizklammern 15 übergeben.

Ein Transferklammerpaar 20 ist zwischen den Eckenfindern 19 jeder Beladestation 11 und der Spreizeinrichtung 13 vorgesehen. Jeweils eine Transferklammer 20 eines Transferklammerpaars 21 ist dabei jedem der beiden gegenüberliegenden Eckenfindern 19 jeder Beladestation 12 zugeordnet. Dazu sind die beiden Transferklammern 21 jedes Transferklammerpaars 21 zusammengefasst. Das jeweilige Transferklammerpaar 21 bildet dadurch eine Doppelklammer für jeweils eine der gegenüberliegenden Ecken 16 des Querrands 17 des Wäschestücks 10.

Das Transferklammerpaar 20 jeder Beladestation 12 ist auf einen Laufwagen an einer Schiene 24 verfahrbar. Die Schiene 24 der mittleren Beladestation 12 verläuft bei der gezeigten Vorrichtung geradlinig in Zuführrichtung 11 längs der Mitte der Eingabemaschine und des Zuführförderers 17. Diese Schiene 24 verläuft in Zuführrichtung aufwärtsgerichtet. Von den äußeren Beladestationen 12 gehen längere, schräg aufwärts und in Richtung zur Spreizeinrichtung 12 verlaufende Schienen 24 aus. Beide Schienen 24 der gegenüberliegenden äußeren Beladestation 11 sind gleich lang, aber unterschiedlich gerichtet, so dass ihre in Zuführrichtung gesehen hinteren Enden konvergierend zur Mitte der Eingabemaschine gerichtet sind, aber vor der Mitte enden, und zwar genauso wie die der mittleren Beladestation 11 zugeordnete Schiene 24. Die Enden der Schienen 24 aller Transferklammerpaare 20 liegen auf einer gemeinsamen horizontalen (gedachten) Linie, die parallel zu der mindestens einen Schiene 24 der Spreizeinrichtung 13 verläuft, aber mit Abstand davor und/oder darüber. Die Längen der Schienen 24 sowie die Positionierungen ihrer zur Spreizeinrichtung 13 weisenden Enden sind so getroffen, dass die Spreizklammern 15 kollisionsfrei an den Transferklammern 21 vorbeilaufen können.

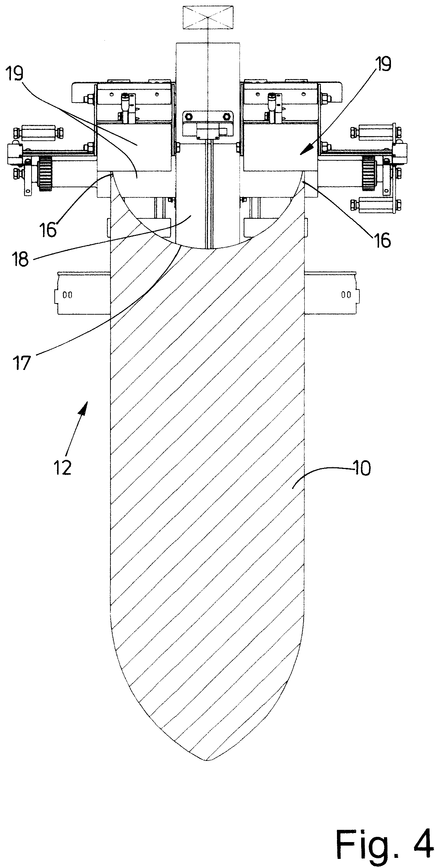

Beim Ausführungsbeispiel der Fig. 3 und 4 sind jeder Beladestation 12 Detektionsmittel zugeordnet, bei denen es sich im gezeigten Ausführungsbeispiel um Sensoren 27 handelt. Am hinteren, oberen Ende jedes Beladeförderers 18 ist über einer gedachten horizontalen Verbindungslinie zwischen den beiden Eckenfindern 19 auf gegenüberliegenden Seiten des Beladeförderers 18 ein Detektionsmittel zugeordnet. Das Detektionsmittel ist dazu ausgebildet, berührungslos von oben den Durchhang des Querrands 17 des an benachbarten Ecken 16 im Walzenspalt 23 des zusammenwirkenden Walzenpaars jedes Eckenfinders 19 gehaltenen Wäschestücks 10 zu ermitteln, insbesondere zu messen.

Das Detektionsmittel ist mittig zwischen den gegenüberliegenden Seiten des Beladeförderers 18 zugeordneten Eckenfindern 19 angeordnet, und zwar so, dass ein Messstrahl 26 des Detektionsmittels die gedachte horizontale Verbindungslinie zwischen gegenüberliegenden Eckenfindern 19 der jeweiligen Beladestation 12 senkrecht schneidet. Dabei kann der Messstrahl 26 auch senkrecht gerichtet verlaufen. Weiterhin ist die Detektionseinrichtung derart zwischen den Eckenfindern 19 angeordnet, dass sie sich geringfügig oberhalb der gedachten Verbindungslinie der Eckenfinder 19 befindet, und zwar ortsfest. Der Messstrahl 26 sowie die gedachte horizontale Verbindungslinie der Eckenfinder 19 liegen dabei vorzugsweise in einer gemeinsamen vertikalen Ebene, in der jedenfalls größtenteils auch das Wäschestück 10 bei in den Walzenspalten 23 der Walzenpaare der Eckenfinder 19 gehaltenen Ecken 16 von den Eckenfindern 19 herunterhängt (Fig. 3). Dadurch verläuft der Messstrahl 26 des Detektionsmittels entlang der vertikalen Längsmittelachse des an gegenüberliegenden Ecken 16 des Querrands 17 von den Eckenfindern 19 gehaltenen Wäschestücks 10 (Fig. 4). Auf diese Weise kann das Detektionsmittel die tiefste Stelle des Durchhangs des Querrands 17 des Wäschestücks 10 berührungslos durch eine Abstandsmessung ermitteln. Zu diesem Zweck ist das Detektionsmittel als ein Sensor 27 ausgebildet, der berührungslos seinen Abstand zur tiefsten Stelle des Durchhangs eines Querrands 17 des Wäschestücks 10 im in der Fig. 4 gezeigten und an den Eckenfindern 19 gehaltenen Zustand von oben nach unten misst.

Bevorzugt handelt es sich beim Sensor 27 um einen solchen, der ein analoges Messsignal bzw. einen analogen Messwert ermittelt. Der jeweilige Sensor 27 ist weiterhin so ausgebildet, dass er sehr rasch die Messergebnisse liefert, insbesondere zeitlich dicht aufeinanderfolgende Messsignale. Dazu ist der analoge Messsignale liefernde Sensor 27 so ausgebildet, dass er Messsignale, insbesondere Längen- und/oder Abstandsmesswerte, mit einer Ausgangsmessfrequenz von unter 20 ms liefert.

Nachfolgend wird das erfindungsgemäße Verfahren unter Bezugnahme auf die zuvor beschriebene Vorrichtung bzw. Eingabemaschine des Ausführungsbeispiels der Fig. 1 bis 4 erläutert:
Jeweils ein einzelnes Wäschestück 10 wird manuell auf den Auflegebereich 22 des Beladeförderers 18 einer Beladestationen 12 aufgelegt. Vom Beladeförderer 18 wird das Wäschestück 10 dann zu den beiden gegenüberliegenden Seiten des oberen Endes des Beladeförderers 18 zugeordneten Eckenfindern 19 transportiert. Der Eckenfindungsprozess ist abgeschlossen, wenn die Eckenfinder in den Walzenspalten 23 ihrer Walzenpaare gegenüberliegende Ecken 16 bzw. Eckbereiche des Querrands 17 des Wäschestücks 11 fixiert haben und halten (Fig. 4).

Während eines momentanen Stillstands des Wäschestücks 10 misst nun der Sensor 27 des Detektionsmittels berührungslos von oben die mittige tiefste Stelle des Durchhangs zwischen den von den Eckenfindern 19 gehaltenen gegenüberliegenden Ecken 16 des oberen Querrands 17 des Wäschestücks 10. Dies geschieht durch eine Abstandsmessung zwischen der tiefsten Stelle des durchhängenden Querrands 17 des Wäschestücks 10 und dem Sensor 27. Der Abstandswert entspricht der Länge eines senkrechten Messstrahls 26, der von oben auf den Querrand 17 des Wäschestücks 10 gerichtet ist und durch die vertikale Längsmittelachse des von den Eckenfindern 19 herunterhängenden Wäschestücks 10 verläuft.

Anhand der fixen Position der gegenüberliegenden Seiten des Beladeförderers 18 zugeordneten Eckenfindern 19, insbesondere ihrer Abstände untereinander und zum Sensor 27, kann aus dem Abstand der tiefsten Stelle des Durchhangs des Querrands 17 des Wäschestücks 10 zum Sensor 27, also der Länge des vorzugsweise senkrechten Messstrahls 26, die Länge des Querrands 17 zwischen den Ecken 16 errechnet werden. Anhand dieser errechneten Länge lässt sich der Verfahrweg, um den die Spreizklammern 15 der Spreizeinrichtung 13 zum Ausbreiten bzw. Spreizen des Wäschestücks 10 auseinandergefahren werden müssen, berechnen bzw. vorherbestimmen zum gezielten Verfahren, insbesondere Auseinanderfahren der Spreizklammern 15 des jeweiligen Spreizklammerpaars.

Nachdem der Durchhang des Querrands 17 beim von den Eckenfindern 19 gehaltenen Wäschestück 10 im stillstehenden Zustand, also statisch, berührungslos ermittelt worden ist, erfolgt eine Übergabe des Wäschestücks 10 von den Eckenfindern 19 an die Transferklammern 21 des der betreffenden Beladestation 12 zugeordneten Transferklammerpaars 20. Diese transportieren das Wäschestück 10 in eine Übergabeposition zur Spreizeinrichtung 13. Sobald das Transferklammerpaar 20 diese Position erreicht hat, erfolgt die Übergabe des Wäschestücks 10 von den Transferklammern 21 an die Spreizklammern 15 des betreffenden Spreizklammerpaars der Spreizeinrichtung 13. Die Spreizklammern 15 des jeweiligen Spreizklammerpaars der Spreizeinrichtung 13 übernehmen das Wäschestück 10 im zusammengefahrenen Zustand, also beim Abstand der Ecken 16 des Querrands 17, der dem Abstand entspricht, mit dem die Ecken in den Transferklammern 21 und auch den Eckenfindern 19 gehaltenen worden sind. Das entspricht vorzugsweise dem Abstand der Ecken 16 bei der Abstandsmessung der tiefsten Stelle des Durchhangs des an den Eckenfindern 19 gehaltenen Wäschestücks 10 zum Sensor 27, also der Länge seines Messstrahls 26.

Aufgrund der am in den Eckenfindern 16 hängenden Wäschestücken 10 gemessenen Durchhang und der daraus berechneten Länge des Querrands 17 des Wäschestücks 10 werden nun die Spreizklammern 15 gezielt so weit auseinandergefahren, dass der Querrand 17 des Wäschestücks von den Spreizklammern 15 im vorgesehenen Umfang ausgebreitet wird, wobei einerseits ein maximaler Restdurchhang des Querrands 17 nicht überschritten wird und andererseits die beim Ausbreiten auf den oberen Querrand 17 von den Spreizklammern 15 ausgeübte Zugkraft nicht größer als zulässig wird.

Denkbar ist es auch, dass das Auseinanderfahren der Spreizklammern 15 in Abhängigkeit von der zuvor ermittelten Länge des Querrands 17 in mehreren Stufen bzw. Schritten mit jeweils unterschiedlichen Geschwindigkeiten erfolgt. Beispielsweise werden zunächst die Spreizklammern 15 ziemlich rasch auseinandergefahren, aber kurz vor Erreichen der errechneten Länge des Querrands 17 abgebremst und mit einer geringeren Geschwindigkeit auseinandergefahren, um das Wäschestück 10 langsamer vollständig auszubreiten. Das lässt ein exaktes Anfahren der zum größtmöglichen Ausbreiten des Wäschestücks 10 führenden Position der Spreizklammern 15 und zur größtmöglichen Schonung des Wäschestücks 10 während des vollständigen und/oder größtmöglichen Ausbreitens bzw. Streckens zu.

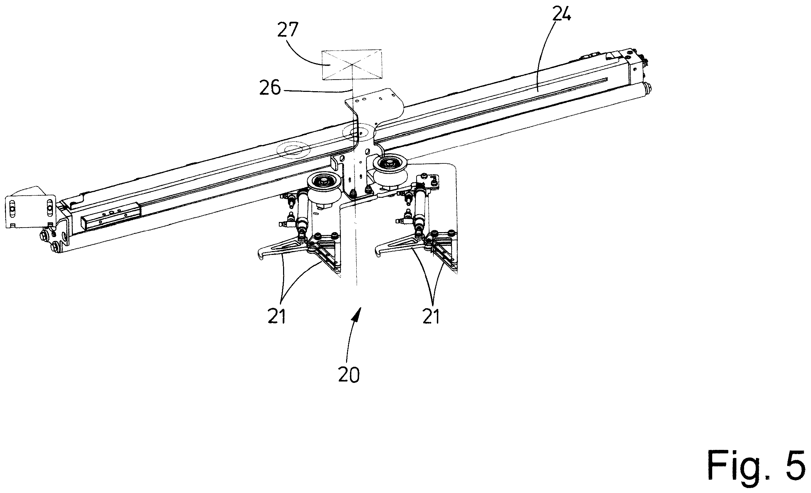

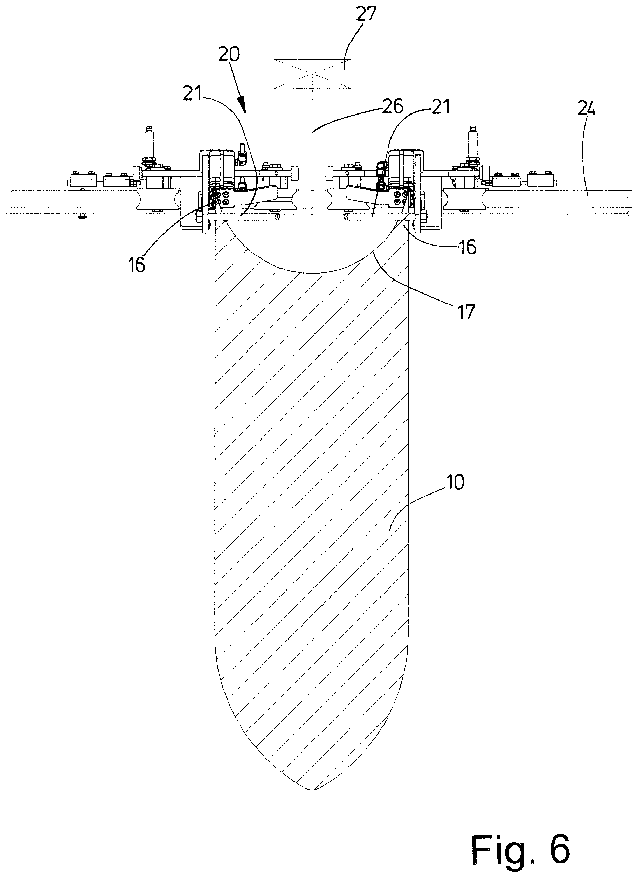

Die Fig. 5 und 6 zeigen ein zweites Ausführungsbeispiel der Vorrichtung, was sich von der zuvor beschriebenen Vorrichtung nur dadurch unterscheidet, dass nicht den Eckenfindern 19 jeder Beladestation 12 ein Detektionsmittel zugeordnet ist, sondern den den Eckenfindern 19 jeder Beladestation 12 nachfolgenden Transferklammerpaaren 20.

Bei diesem Ausführungsbeispiel ist oberhalb des jeweiligen Transferklammerpaars 20, und zwar mittig zwischen den eine Doppelklammer bildenden Transferklammern 21 des jeweiligen Transferklammerpaars 20, ein als Detektionsmitteln dienender Sensor 27 vorgesehen. Der Sensor 27 befindet sich derart oberhalb des Transferklammerpaar 20, dass sein senkrecht gerichteter Messstrahl 26 eine gedachte horizontale Verbindungslinie zwischen den beiden Transferklammern 21 des Transferklammerpaars 20 senkrecht schneidet (Fig. 6). Dabei liegen der Messstrahl 26 und die gedachte Verbindungslinie zwischen den Transferklammern 21 in einer Ebene. Vorzugsweise entspricht diese Ebene der Ebene des von den Transferklammern 21 senkrecht herunterhängenden Wäschestücks 10. Dann verläuft der Messstrahl 26 durch eine vertikale Längsmittelachse des mit gegenüberliegenden Ecken 16 des Querrands 17 von den Transferklammern 21 gehaltenen und vom jeweiligen Transferklammerpaar 20 herunterhängenden Wäschestücks 10.

Auch der Sensor 27 des Ausführungsbeispiels der Fig. 5 und 6 misst berührungslos den senkrechten Abstand zur tiefsten Stelle des mit seinen gegenüberliegenden Ecken 16 von den Transferklammern 21 gehaltenen Querrands 17. Die Messung erfolgt vorzugsweise bei momentan stillstehenden Transferklammern, beispielsweise nach dem diese das Wäschestück 10 von den Eckenfindern 19 übernommen haben oder das Transferklammerpaar 20 auf die Übergabe des Wäschestücks 10 an die Spreizklammern 15 der Spreizeinrichtung 13 wartet.

Das erfindungsgemäße Verfahren läuft bei dem von oben, vorzugsweise senkrecht von oben, auf den durchhängenden Querrand 17 gerichteten Detektionsmittel bzw. Sensor 27 genauso ab wie zuvor in Verbindung mit dem Ausführungsbeispiel der Fig. 3 und 4 geschildert. Hierauf wird Bezug genommen.

Es erfolgt nach alledem bei beiden Ausführungsbeispielen der Erfindung vor der Übergabe der Ecken 16 des Querrands 17 des Wäschestücks 10 an die Spreizklammern 15 die Ermittlung der Länge des Querrands 17 aus einem vom Detektionsmittel berührungslos ermittelten Abstandsmaß zwischen dem Detektionsmittel und der Stelle des tiefsten Durchhangs des Querrands 17. Vorzugsweise ist es vorgesehen, dass das Detektionsmittel über dem Querrand 17 angeordnet ist und somit der vom Detektionsmittel erzeugte Messstrahl 26 vorzugsweise senkrecht gerichtet von oben auf den Querrand 17, nämlich die tiefste Stelle seines Durchhangs zwischen den Transferklammern 21 bzw. den Eckenfindern 19, gerichtet ist.

### Bezugszeichenliste:

- 10: Wäschestück
- 11: Zuführrichtung
- 12: Beladestation
- 13: Spreizeinrichtung
- 15: Spreizklammer
- 16: Ecke
- 17: Querrand
- 18: Beladeförderer
- 19: Eckenfinder
- 20: Transferklammerpaar
- 21: Transferklammer
- 22: Auflegebereich
- 23: Walzenspalt
- 24: Schiene
- 26: Messstrahl
- 27: Sensor

## Patentansprüche

1. Verfahren zum Ausbreiten von Wäschestücken (10), wobei ein jeweils an zwei benachbarten Eckbereichen oder Ecken (16) eines Rands von zwei Spreizklammern (15) einer Spreizeinrichtung (13) gehaltenes Wäschestück (10) durch gezieltes Auseinanderfahren der Spreizklammern (15) unter Berücksichtigung der ermittelten Länge des Rands ausgebreitet wird zur Beseitigung oder mindestens weitgehenden Beseitigung des Durchhangs des Rands (17) des Wäschestücks (10) und vor der Übergabe der Eckbereiche bzw. Ecken (16) des Rands des Wäschestücks (10) an die Spreizklammern (15) bei von vor der Spreizeinrichtung (13) angeordneten Haltemitteln gehaltenen benachbarten Eckbereichen bzw. Ecken (16) des Rands des Wäschestücks (10) der Rand zwischen den von den Haltemitteln gehaltenen Eckbereichen oder Ecken (16) des jeweiligen Wäschestücks (10) vermessen und daraus die Länge des Rands ermittelt wird, **dadurch gekennzeichnet, dass** die Länge des Rands des Wäschestücks (10) aus einer von mindestens einem über dem Rand angeordneten Detektionsmittel erfolgten Abstandsmessung ermittelt wird.

2. Verfahren nach Anspruch 1, **dadurch gekennzeichnet, dass** die Länge des Rands des Wäschestücks (10) vor der Übergabe an die Spreizeinrichtung (13) aus einer Messung des Durchhangs des von den Haltemitteln an seinen benachbarten Eckbereichen oder Ecken (16) gehaltenen Rands ermittelt wird, vorzugsweise bei gleichbleibendem Abstand der Haltemittel und/oder momentan stillstehenden Haltemitteln.

3. Verfahren nach Anspruch 2, **dadurch gekennzeichnet, dass** der Durchhang des von den Haltemitteln an seinen benachbarten Ecken (16) oder Eckbereichen gehaltenen Rands des Wäschestücks (10) von oben, vorzugsweise durch mindestens ein über dem Rand angeordnetes Detektionsmittel, ermittelt wird.

4. Verfahren nach einem der vorhergehenden Ansprüche, **dadurch gekennzeichnet, dass** die Länge des Randes abgeleitet und/oder errechnet wird aus wenigstens einer Messung einer tiefsten Stelle oder des tiefsten Bereichs des durchhängenden Rands des Wäschestücks (10), vorzugsweise mindestens eine berührungslose Messung.

5. Verfahren nach einem der vorhergehenden Ansprüche, **dadurch gekennzeichnet, dass** nach der Ermittlung der Länge des Rands bei zwischen den von den Haltemitteln gehaltenen Ecken (16) oder Eckbereichen des Wäschestücks (10) letzteres von den Haltemitteln direkt an die Spreizklammern (15) übergeben wird oder zunächst an andere Haltemittel übergeben wird, die anschließend das Wäschestück (10) dann mit benachbarten Ecken (16) bzw. Eckbereichen des vorher hinsichtlich seines Durchhangs vermessenen Rands des Wäschestücks (10) an die Spreizklammern (15) übergeben.

6. Verfahren nach Anspruch 1, **dadurch gekennzeichnet, dass** aus dem bei der Abstandsmessung gewonnenen Abstandsmaß der tiefsten Stelle bzw. des tiefsten Bereichs des durchhängenden Rands zwischen den von den Haltemitteln gehaltenen Ecken (16) oder Eckbereichen des Wäschestücks (10) anhand der bekannten Positionen der Haltemittel und des mindestens einen Detektionsmittels die Länge des Rands rechnerisch ermittelt wird.

7. Verfahren nach Anspruch 2, **dadurch gekennzeichnet, dass** anhand der unter Berücksichtigung des am von den Haltemitteln herunterhängenden Wäschestücks (10) gemessenen Durchhangs des Rands des Wäschestücks (10) errechneten Länge des Rands des Wäschestücks (10) nach der Übergabe des Wäschestücks (10) an die Spreizklammern (15) letztere gezielt gesteuert zum Ausbreiten des Wäschestücks (10) auseinandergefahren werden zum Ausbreiten des Wäschestücks (10) mit geringstmöglichem Durchhang des Rands des Wäschestücks (10).

8. Vorrichtung, insbesondere Eingabemaschine, zum Ausbreiten von Wäschestücken (10) mit einer mindestens zwei auseinander- und zusammenfahrbare Spreizklammern (15) für benachbarte Eckbereiche oder Ecken (16) eines Rands des jeweiligen Wäschestücks (10) aufweisenden Spreizeinrichtung (13), mit vor der Spreizeinrichtung (13) angeordneten Haltemitteln benachbarter Ecken (16) bzw. Eckbereiche des zu vermessenden Rands des Wäschestücks (10) und mit wenigstens einem Detektionsmittel zur Ermittlung der Länge oder des Durchhangs des von der Spreizeinrichtung (13) auszustreckenden vorderen Rands des Wäschestücks (10), **dadurch gekennzeichnet, dass** das wenigstens eine Detektionsmittel über einer gedachten Verbindungslinie zwischen den Haltemitteln etwa mittig zwischen den gegenüberliegende Ecken (16) bzw. Eckbereiche des Rands des Wäschestücks (10) haltenden Haltemitteln angeordnet ist zur Ermittlung eines von oben auf die tiefste Stelle des zwischen den Haltemitteln mit Durchhang gehaltenen Rands des Wäschestücks (10) gerichteten Abstands- bzw. Tiefenmaßes.

9. Vorrichtung nach Anspruch 8, **dadurch gekennzeichnet, dass** das mindestens eine Detektionsmittel senkrecht über und/oder dicht oberhalb der gedachten Verbindungslinie zwischen den Haltemitteln angeordnet ist.

## Claims

1. A method for spreading out laundry items (10), wherein a laundry item (10) held in each case at two adjacent corner regions or corners (16) of an edge by two spreading clamps (15) of a spreading device (13) is spread out by targeted movement apart of the spreading clamps (15) while taking into consideration the determined length of the edge, in order to eliminate or at least largely eliminate the sag of the edge (17) of the laundry item (10) and before transferring the corner regions or corners (16), respectively, of the edge of the laundry item (10) to the spreading clamps (15), with adjacent corner regions or corners (16), respectively, of the edge of the laundry item (10) held by holding means arranged upstream of the spreading device (13), the edge between the corner regions or corners (16) of the respective laundry item (10) which are held by the holding means is measured and the length of the edge is determined therefrom, **characterized in that** the length of the edge of the laundry item (10) is determined from a spacing measurement carried out by at least one detection means arranged above the edge.

2. The method as claimed in claim 1, **characterized in that,** before transfer to the spreading device (13), the length of the edge of the laundry item (10) is determined from a measurement of the sag of the edge held at its adjacent corner regions or corners (16) by the holding means, preferably with the spacing of the holding means remaining the same and/or with the holding means momentarily at a standstill.

3. The method as claimed in claim 2, **characterized in that** the sag of the edge of the laundry item (10) held at its adjacent corners (16) or corner regions by the holding means is determined from above, preferably by at least one detection means arranged above the edge.

4. The method as claimed in any one of the preceding claims, **characterized in that** the length of the edge is derived and/or calculated from at least one measurement, preferably at least one contactless measurement, of a lowest point or of the lowest region of the sagging edge of the laundry item (10).

5. The method as claimed in any one of the previous claims, **characterized in that,** after determining the length of the edge between the corners (16) or corner regions of the laundry item (10) which are held by the holding means, said laundry item (10) is transferred directly from the holding means to the spreading clamps (15) or is first transferred to other holding means which then transfer the laundry item (10) to the spreading clamps (15) with adjacent corners (16) or corner regions, respectively, of the edge of the laundry item (10) previously measured with respect to its sag.

6. The method as claimed in claim 1, **characterized in that** the length of the edge is determined computationally from the spacing dimension, obtained during the spacing measurement, of the lowest point or of the lowest region of the sagging edge between the corners (16) or corner regions of the laundry item (10) held by the holding means on the basis of the known positions of the holding means and of the at least one detection means.

7. The method as claimed in claim 2, **characterized in that,** on the basis of the length of the edge of the laundry item (10) calculated with consideration to the sag of the edge of the laundry item (10) measured on the laundry item (10) hanging down from the holding means, after transferring the laundry item (10) to the spreading clamps (15), the latter are moved apart in a targeted and controlled manner to spread out the laundry item (10) in order to spread out the laundry item (10) with the least possible sag of the edge of the laundry item (10).

8. An apparatus, in particular feeding machine, for spreading out laundry items (10), having a spreading device (13) which has at least two spreading clamps (15), which can be moved apart and together, for adjacent corner regions or corners (16) of an edge of the respective laundry item (10), having holding means, arranged upstream of the spreading device (13), of adjacent corners (16) or corner regions, respectively, of the edge to be measured of the laundry item (10) and having at least one detection means for determining the length or the sag of the front edge of the laundry item (10) to be stretched out by the spreading device (13), **characterized in that** the at least one detection means is arranged above an imaginary connection line between the holding means and approximately centrally between the holding means which hold opposite corners (16) or corner regions, respectively, of the edge of the laundry item (10), in order to determine a spacing or depth dimension directed from above onto the lowest point of the edge of the laundry item (10) held with sag between the holding means.

9. The apparatus as claimed in claim 8, **characterized in that** that the at least one detection means is arranged vertically above and/or closely above the imaginary connection line between the holding means.

## Revendications

1. Procédé permettant d'étaler des pièces de linge (10), dans lequel une pièce de linge (10), tenue respectivement au niveau de deux zones de coin ou coins (16) adjacents d'un bord par deux pinces d'écartement (15) d'un équipement d'écartement (13), est étalée par la séparation ciblée des pinces d'écartement (15) en tenant compte de la longueur établie du bord afin d'éliminer ou du moins substantiellement éliminer l'affaissement du bord (17) de la pièce de linge (10), et avant le transfert des zones de coin ou coins (16) du bord de la pièce de linge (10) aux pinces d'écartement (15), lorsque les zones de coins ou coins (16) du bord de la pièce de linge (10) sont maintenus par des moyens de retenue disposés devant l'équipement d'écartement (13), le bord est mesuré entre les zones de coin ou coins (16) de la pièce de linge (10) respective, tenus par les moyens de retenue, et la longueur du bord est établie de ce fait,
**caractérisé en ce que** la longueur du bord de la pièce de linge (10) est établie à partir d'une mesure de distance effectuée par au moins un moyen de détection disposé au-dessus du bord.

2. Procédé selon la revendication 1, **caractérisé en ce que** la longueur du bord de la pièce de linge (10) est établie avant le transfert à l'équipement d'écartement (13) à partir d'une mesure de l'affaissement du bord tenu par les moyens de retenue au niveau des zones de coins ou coins (16) adjacents de la pièce, de préférence avec une distance constante des moyens de retenue et/ou avec des moyens de retenue momentanément immobilisés.

3. Procédé selon la revendication 2, **caractérisé en ce que** l'affaissement du bord de la pièce de linge (10), tenu par les moyens de retenue au niveau des coins (16) ou zones de coin de la pièce, est établi par le haut, de préférence par au moins un moyen de détection disposé au-dessus du bord.

4. Procédé selon l'une quelconque des revendications précédentes, **caractérisé en ce que** la longueur du bord est déduite et/ou calculée à partir d'au moins une mesure d'un point le plus bas ou de la zone la plus basse du bord affaissé de la pièce de linge (10), de préférence à partir d'au moins une mesure sans contact.

5. Procédé selon l'une quelconque des revendications précédentes, **caractérisé en ce qu'**après l'établissement de la longueur du bord entre les coins (16) ou zones de coin de la pièce de linge (10) tenus par les moyens de retenue, la pièce est transférée des moyens de retenue directement aux pinces d'écartement (15) ou est d'abord transférée à d'autres moyens de retenue qui transfèrent ensuite ultérieurement la pièce de linge (10) aux pinces d'écartement (15) avec des coins (16) ou zones de coin adjacents du bord de la pièce de linge (10) préalablement mesuré quant à son affaissement.

6. Procédé selon la revendication 1, **caractérisé en ce que** la longueur du bord est établie par calcul à partir de la mesure de distance obtenue lors de la prise de mesure de distance du point le plus bas ou de la zone la plus basse du bord affaissé entre les coins (16) ou zones de coin de la pièce de linge (10), tenus par les moyens de retenue, à l'aide des positions connues des moyens de retenue et du au moins un moyen de détection.

7. Procédé selon la revendication 2, **caractérisé en ce qu'**à l'aide de la longueur du bord de la pièce de linge (10) calculée en tenant compte de l'affaissement du bord de la pièce de linge (10) mesuré sur la pièce de linge (10) suspendue aux moyens de retenue, après le transfert de la pièce de linge (10) aux pinces d'écartement (15), celles-ci sont séparées avec une commande ciblée pour étaler la pièce de linge (10) afin d'étaler la pièce de linge (10) avec l'affaissement le plus faible possible du bord de la pièce de linge (10).

8. Dispositif, en particulier machine d'introduction, permettant d'étaler des pièces de linge (10), comprenant un équipement d'écartement (13) présentant au moins deux pinces d'écartement (15) pouvant être séparées et rapprochées pour des zones de coin ou coins (16) adjacents d'un bord de la pièce de linge (10) respective, comprenant des moyens, disposés devant l'équipement d'écartement (13), permettant de tenir des coins (16) ou zones de coin adjacents du bord à mesurer de la pièce de linge (10), et comprenant au moins un moyen de détection permettant d'établir la longueur ou l'affaissement du bord avant de la pièce de linge (10) à étendre par l'équipement d'écartement (13),
**caractérisé en ce que** ledit au moins un moyen de détection est disposé au-dessus d'une ligne de jonction imaginaire entre les moyens de retenue de manière approximativement centrée entre les moyens de retenue tenant des coins (16) ou zones de coin opposés du bord de la pièce de linge (10) afin d'établir une mesure de distance ou de profondeur orientée par le haut vers le point le plus bas du bord de la pièce de linge (10) tenu avec un affaissement entre les moyens de retenue.

9. Dispositif selon la revendication 8, **caractérisé en ce que** ledit au moins un moyen de détection est disposé perpendiculairement au-dessus et/ou juste au-dessus de la ligne de jonction imaginaire entre les moyens de retenue.
